# EUROPEAN PATENT APPLICATION

(11) **EP 3 170 687 A1**
(43) Date of publication of application: **24.05.2017**
(21) Application number: 16197815.0
(22) Date of filing: 08.11.2016
(51) Int. Cl.: B60H 1/00

(54) **VEHICLE AIR CONDITIONING UNIT**

(30) Priority: 18.11.2015 JP 2015225247
(71) Applicant: Valeo Japan Co., Ltd., Saitama 360-0193 (JP)
(72) Inventor: NAGANO, Hideki, Saitama 360-0193 (JP)
(74) Representative: Metz, Gaëlle

(57) **Abstract**

A vehicle air conditioning unit (1) is accommodated in a case (4) and includes the air mix chamber (11) in which air passing through a heating exchanger (7) is mixed with air bypassing the heating exchanger (7), a hot air guide passage (20), disposed in an air duct (5), that guides a part of hot air from a lower part to the inside of the air mix chamber (11), and a movable guide (25) disposed in the air duct (5) and including a rotary shaft (26) and a door body (27). The movable guide (25) extends the hot air guide passage (20) to an upper part of the air mix chamber (11) using an extension part (271) of the door body (27) in the lower limit position of rotation of the door body (27) and extends the hot air guide passage (20) using the movable guide (25) in the air mix mode.

## Description

### BACKGROUND OF THE INVENTION

### 1. Field of the Invention

The present invention relates to a vehicle air conditioning unit provided with an air mix chamber having a hot air guide passage for guiding hot air heated by a heating exchanger to an upward part.

### 2. Description of the Related Art

In a vehicle air conditioning apparatus, when hot air heated by a heating exchanger is mixed with cool air bypassing the heating exchanger in an air mix chamber, in order to promote the mixture of the hot air and the cool air, it is desirable to guide the hot air flowing from the lower part to the upper part of the air mix chamber while preventing the hot air from being blocked by a flow of the cool air. In consideration of this point, JP-A-2010-18248 discloses the structure (structure for crossing a cool air duct) in which a hot air guide passage for passing a part of the hot air having passed through a hot air passage heated by a heater core (heating exchanger) is disposed in the air mix chamber to guide the hot air from the lower part to the upper part of the air mix chamber.

In addition, JP-A-2010-18248 discloses the structure in which, when the cool air having bypassed the heater core flows in the air mix chamber, to prevent the passage resistance of cool air from being increased by the hot air guide passage, the plurality of hot air guide passages are disposed in the portions (projection portions) corresponding to partitioning parts partitioning the outlet port of the cool air (that is, the structure in which the hot air guide passage is disposed in a portion in which the speed of cool air is slow).

### SUMMARY OF THE INVENTION

However, since the hot air guide passage proposed in JP-A-2010-18248 is disposed so as to cross the cool air duct of the air mix chamber from the lower part to the upper part of the cool air duct, even when the hot air guide passage is disposed in a portion in which the speed of cool air is slow, an increase in the air-flow resistance of cool air cannot be prevented eventually.

An object of the invention is to provide a vehicle air conditioning unit capable of guiding a part of hot air to the upper part of the air mix chamber and suppressing an increase in the air-flow resistance of cool air.

A vehicle air conditioning unit 1 according to the invention includes a case 4 having an air duct 5 through which air flows, a heating exchanger 7 that heats the air flowing through the air duct 5 to generate hot air, an air mix door 8 disposed in the air duct 5, the air mix door 8 adjusting a ratio between the air flowing to the heating exchanger 7 and the air bypassing the heating exchanger 7, an air mix chamber 11 provided in the case 4, the air mix chamber mixing the air having passed through the heating exchanger 7 with the air having bypassed the heating exchanger 7, a hot air guide passage 20 disposed in the air duct 5, the hot air guide passage 20 guiding a part of the hot air from a lower part of the air mix chamber 11 to an inside of the air mix chamber 11, and a movable guide 25 disposed in the air duct 5, the movable guide 25 including a rotary shaft 26 and a door body 27 provided on the rotary shaft 26, the door body 27 extending the hot air guide passage 20 to an upper part of the air mix chamber 11 in a first rotary position, the door body 27 being positioned outside the air mix chamber 11 in a second rotary position (first aspect).

For example, in an air mix mode, the hot air generated by passing through the heating exchanger reaches the air mix chamber, and a part of the hot air having reached the air mix chamber is guided via the hot air guide passage to the inside of the air mix chamber. According to the invention, if the hot air guide passage is extended to the upper part of the air mix chamber by placing the movable guide in the first rotary position, a part of hot air can be guided to the upper part of air mix chamber without being blocked by a flow of cool air.

For example, in a full cool mode, the air (cool air) having bypassed the heating exchanger reaches the air mix chamber. According to the invention, if the movable guide is placed in the second rotary position and is positioned outside the air mix chamber, it is possible to suppress an increase in the air-flow resistance when the cool air passes through the air mix chamber.

In the second aspect of the invention, the movable guide 25 is placed in the first rotary position in the air mix mode in which the air flowing to the heating exchanger 7 is mixed with the air bypassing the heating exchanger 7 in the air mix chamber 11. In the full cool mode in which only the air bypassing the heating exchanger 7 flows to the air mix chamber 11, the movable guide 25 is placed in the second rotary position.

This surely guides a part of hot air to the upper part of the air mix chamber via the movable guide in the air mix mode and surely suppresses an increase in the air-flow resistance of cool air due to the movable guide in the full cool mode.

In a third aspect of the invention, the door body 27 of the movable guide 25 has an overlap part 28 overlapping with an end part on a downstream side of the hot air guide passage 20 in the first rotary position.

This prevents a part of the hot air from escaping (leaking) from the gap between the hot air guide passage and the door body of the movable guide when the air (hot air) having flowed through the hot air guide passage flows to the door body of the movable guide, thereby preventing reduction in the amount of the hot air flowing to the upper part of the air mix chamber.

In a fourth aspect of the invention, the overlap part 28 of the door body 27 is made of an elastic member.

This prevents an unusual sound from occurring or an end part on the downstream side of the hot air guide passage from being damaged when the door body abuts against the end part on the downstream side of the hot air guide passage. In addition, when the door body abuts against the hot air guide passage, the closeness between the door body and the hot air guide passage can be improved. Accordingly, it is possible to prevent a part of the hot air from escaping (leaking) from the gap between the hot air guide passage and the door body of the movable guide when the air (hot air) having flowed through the hot air guide passage flows to the door body (movable guide), surely preventing reduction in the amount of the hot air flowing to the upper part of the air mix chamber.

In a fifth aspect of the invention, a plurality of the hot air guide passages 20 are disposed along the left-right direction of the vehicle. In addition, the door body 27 is disposed so as to correspond to the plurality of the hot air guide passages 20 disposed and includes a plurality of extension parts 271 extending the hot air guide passages 20 in the first rotary position and a plurality of notch parts 272 provided between the plurality of extension parts 271. The disposition corresponding to the plurality of hot air guide passages means that, for example, the extension parts are disposed so as to correspond to the number of hot air guide passages, the width of the hot air guide passage, and the interval between the hot air guide passages.

Therefore, since the door body is provided with a plurality of extension parts disposed so as to correspond to the plurality of the hot air guide passages disposed, when the door body is placed in the first rotary position, the extension parts can be used to extend the hot air guide passages. In addition, the notch parts (through which cool air can pass) and the extension parts are provided alternately, thereby suppressing an increase in the air-flow resistance of cool air flowing through the air mix chamber.

In a sixth aspect of the invention, a plurality of the hot air guide passages 20 are disposed along the left-right direction of the vehicle. In addition, the door body 27 is disposed so as to correspond to the plurality of the hot air guide passages 20 disposed and the plurality of extension parts 271 extending the hot air guide passages 20 in the predetermined rotary position and the plurality of extension parts 271 and a plurality of bridge parts 275 are provided alternately.

Therefore, since the door body is provided with a plurality of extension parts disposed so as to correspond to the plurality of the hot air guide passages disposed, when the door body is placed in the first rotary position, the extension parts can be used to extend the hot air guide passages. In addition, the extension parts and the bridge parts for limiting a flow of cool air are provided alternately, it is possible to adjust the ratio of mixture between hot air and cool air by adjusting the rotary position of the door body to adjust the amount of cool air to be joined to hot air and adjust the direction of a flow of cool air.

In a seventh aspect of the invention, a plurality of the hot air guide passages 20 are disposed along the left-right direction of the vehicle. In addition, the door body 27 is disposed so as to correspond to the plurality of the hot air guide passages 20 disposed and includes the plurality of extension parts 271 extending the hot air guide passages 20 in the first rotary position and air guide parts 274 extending along the extension parts 271 and partitioning the extension parts 271 in the left-right direction of the vehicle.

Therefore, when air (hot air) flowing through the hot air guide passages is guided to the upper part of the air mix chamber along the door body of the movable guide, the hot air can be surely guided to the upper part of the air mix chamber.

As described above, according to the invention, by guiding the hot air guide passages to the upper part of the air mix chamber with the movable guide placed in the first rotary position, it is possible to guide a part of hot air to the upper part of the air mix chamber without being blocked by a flow of cool air and to suppress an increase in the air-flow resistance when cool air passes through the air mix chamber by placing the movable guide in the second rotary position so as to position the movable guide outside the air mix chamber.

### BRIEF DESCRIPTION OF THE DRAWINGS

Fig. 1 is an explanatory diagram illustrating the structure of a vehicle air conditioning unit (having a movable guide) according to the invention.
Fig. 2 is a cross sectional view illustrating the vehicle air conditioning unit taken along line A-A in Fig. 1.
Fig. 3 is an enlarged perspective view illustrating a movable guide according to embodiment 1.
Fig. 4 is an explanatory diagram illustrating the position of the movable guide in an air mix mode.
Fig. 5 is an explanatory diagram illustrating the position of the movable guide in a full hot mode.
Fig. 6 is an explanatory diagram illustrating the position of the movable guide in a full cool mode.
Fig. 7 is an enlarged perspective view illustrating the structure of a movable guide according to embodiment 2.
Fig. 8 is an enlarged perspective view illustrating a movable guide according to embodiment 3.

### DESCRIPTION OF THE PREFERRED EMBODIMENTS

Embodiments of the invention will be described below with reference to the attached drawings. Embodiments described below are only examples of the invention and the invention is not limited to the following embodiments. In this specification and drawings, components having the same reference numerals are identical to each other. These embodiments may be changed as long as the effects of the invention are obtained.

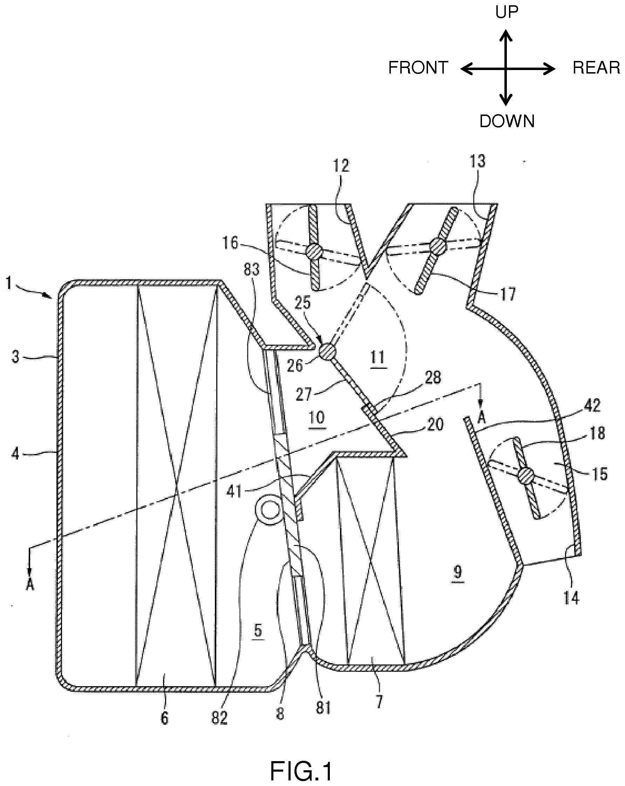

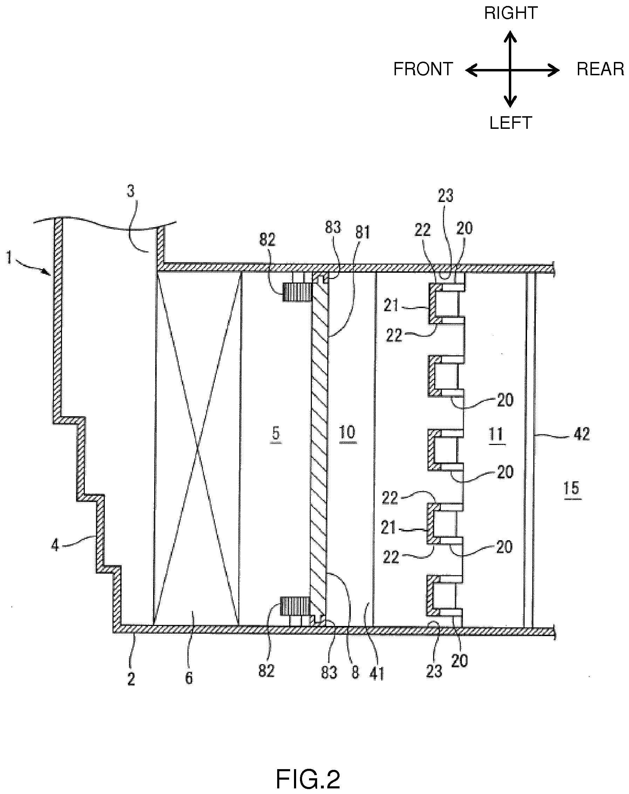

Fig. 1 to Fig. 6 illustrate an example of a vehicle air conditioning unit 1 according to embodiment 1 of the invention. This vehicle air conditioning unit 1 is of semi-integration type including a blower unit (not illustrated) and an HVAC unit 2 and is accommodated in, for example, the center console of the vehicle. The blower unit is a known one and blows one or both of inside air introduced from an inside air introduction port and outside air introduced from an outside air introduction port to the HVAC unit 2 via a communication passage 3 illustrated in Fig. 2. In addition, the blower unit is disposed in the left or right direction of the vehicle with respect to the HVAC unit 2.

The HVAC unit 2 includes the case 4 incorporating the air duct 5, a cooling exchanger 6 disposed in the air duct 5, the heating exchanger 7, and the air mix door 8.

The cooling exchanger 6 is a known one and, for example, an evaporator for cooling air blown from the blower unit. The cooling exchanger 6 is vertically provided so that all air flowing through the air duct 5 passes through the cooling exchanger 6. The cooling exchanger 6 is formed by, for example, alternately laminating a corrugated fin and a tube as a plurality of layers and has a tank in an end in a longitudinal direction of the tube and jointed as appropriate to another air conditioning device (not illustrated) via a pipe or the like to configure a freezing cycle.

The heating exchanger 7 is a known one and, for example, a hot water type heater core or the like for heating air cooled by the cooling exchanger 6. The heating exchanger 7 is vertically provided in a lower part of the air duct 5 in embodiment 1. The heating exchanger 7 is formed by, for example, alternately laminating a corrugated fin and a tube as a plurality of layers. The heating exchanger 7 has a tank in an end in a longitudinal direction of the tube and jointed as appropriate to another device (not illustrated) via a pipe or the like to configure a radiation cycle.

The air mix door 8 is a known one, disposed between the cooling exchanger 6 and the heating exchanger 7, and adjusts the ratio between the air passing through the heating exchanger 7 and the air bypassing the heating exchanger 7. The air mix door 8 according to embodiment 1 is a slide door type in which a plate 81 is displaced up and down along a guide rail 83 by rotation of a gear 82. The air mix door 8 is not limited to such a slide door type and may be, for example, a so-called rotary type, so-called cantilever type, or so-called butterfly door type, although not illustrated.

In addition, the HVAC unit 2 includes, as a part of the air duct 5, a hot air duct 9 through which air (hot air) heated by the heating exchanger 7 passes, a cool air duct 10 through which air (cool air) having bypassed the heating exchanger 7 passes, and the air mix chamber 11 (at which the hot air and the cool air meet) provided on the downstream side of the hot air duct 9 and the cool air duct 10. In addition, the HVAC unit 2 includes, as outlet ports from which air having flowed through the air duct 5 is blown, a defrost outlet port 12, a vent outlet port 13, and a foot outlet port 14 that communicate with the downstream side of the air mix chamber 11.

In embodiment 1, the case 4 has an air guide intermediate wall 41 extending from the middle in the up-down direction of the air mix door 8 to the part above the heating exchanger 7 and the air guide intermediate wall 41 performs partitioning between the hot air duct 9 and the cool air duct 10 to prevent hot air from being unintendedly mixed with cool air on the upstream side of the air mix chamber 11.

The defrost outlet port 12 is formed in the upper part of the HVAC unit 2 and the opening of the defrost outlet port 12 is adjusted by a defrost door 16 disposed in the vicinity of the defrost outlet port 12. The air having passed through the defrost outlet port 12 is blown via a duct (connected as necessary) to the front glass of the vehicle.

The vent outlet port 13 is formed in the upper part of the HVAC unit 2 and the opening of the vent outlet port 13 is adjusted by a vent door 17 disposed in the vicinity of the vent outlet port 13. The air having passed through the vent outlet port 13 is blown via a duct (connected as necessary) to the upper body of the occupant in the vehicle.

The foot outlet port 14 is formed in the lower part of the HVAC unit 2 and the opening of the foot outlet port 14 is adjusted by a foot door 18 disposed in the vicinity of the foot outlet port 14. The air having passed through the foot outlet port 14 is blown via a duct (connected as necessary) to the feet or lower body of the occupant in the vehicle. In embodiment 1, the foot outlet port 14 is formed at the lower end of a foot duct 15 communicating with the air mix chamber 11. The foot duct 15 is partitioned from the hot air duct 9 by an air guide intermediate wall 42.

Various types of blowing modes can be achieved by adjusting the positions of the defrost door 16, the vent door 17, and the foot door 18 as appropriate. Although the defrost door 16, the vent door 17, and the foot door 18 are indicated as butterfly doors in the embodiment, these doors may be rotary doors or cantilever doors.

In such a structure, the air blown from a blower unit (not illustrated) to the HVAC unit 2 reaches the upstream side of the cooling exchanger 6 and cooled when passing through the cooling exchanger 6, the ratio between the air flowing through the heating exchanger 7 and the air bypassing the heating exchanger 7 is adjusted according to the opening of the air mix door 8, these types of air are mixed as appropriate in the air mix chamber 11 on the downstream side of the air mix door 8, and the mixed air is blown into the vehicle interior via the defrost outlet port 12, the vent outlet port 13, or the foot outlet port 14 opened according to the blowing mode.

In the part of the air guide intermediate wall 41 closer to the rear end of the vehicle than the heating exchanger 7, the plurality of hot air guide passages 20 are disposed along the left-right direction of the vehicle as illustrated in Fig. 2. As indicated in this embodiment, the hot air guide passages 20 may be formed integrally with the case 4 or may be formed separately from the case 4 and disposed in the air mix chamber 11. In addition, as illustrated in Fig. 2, the hot air guide passages 20 are formed integrally with the air guide intermediate wall 41 in the embodiment, extends toward the defrost outlet port 12, and their ends reach the insides of the air mix chamber 11 in the up-down direction of the vehicle. The number of the hot air guide passages 20 is, for example, five and each of the hot air guide passages 20 includes a planar bottom wall part 21 and side wall portions 22 extending from the left and right side edges of the bottom wall part 21 as illustrated in Fig. 2 and the side wall portion 22, the bottom wall part 21, and the side wall portion 22 form a substantially U-shaped cross section. In addition, a void 23 is formed between the hot air guide passages 20 and 20 adjacent to each other and between the hot air guide passage 20 and the case 4 as illustrated in Fig. 2 so that cool air can pass through the void 23.

As illustrated in Fig. 1, the movable guide 25 is disposed in the part closer to the upper part of the vehicle than the hot air guide passage 20 in the air mix chamber 11. In the embodiment, the movable guide 25 includes the rotary shaft 26 and the door body 27 provided on the rotary shaft 26. The structure of the door body 27 will be described later.

In the embodiment, the rotary shaft 26 is positioned in an extension of the bottom wall part 21 of the hot air guide passage 20 and positioned close to the case 4. In the embodiment, the rotary shaft 26 is rotatably attached to the case 4.

The lower limit position (first rotary position) of rotation of the movable guide 25 is the position (that is, the position in which the door body 27 substantially overlaps with an extension of the bottom wall part 21) obtained by extending the hot air guide passage 20 toward the upper part of the air mix chamber 11. In the movable guide 25, the upper limit position (second rotary position) of rotation is the position (that is, the position in which the door body 27 is outside of the area continued from the cool air duct 10 to the vent outlet port 13) in which the door body 27 is outside of the air mix chamber 11. In Fig. 1, in the upper limit position of the movable guide 25, the movable guide 25 crosses the area continued from the air mix chamber 11 to the defrost outlet port 12, but the movable guide 25 does not need to cross the area continued from the air mix chamber 11 to the defrost outlet port 12. An increase in the air-flow resistance in a defrost mode can be suppressed.

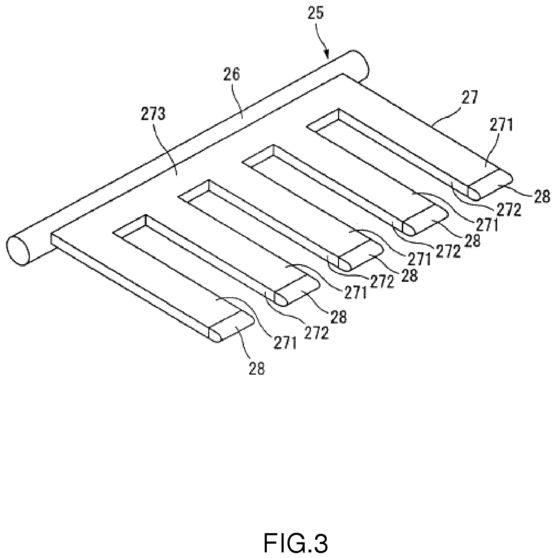

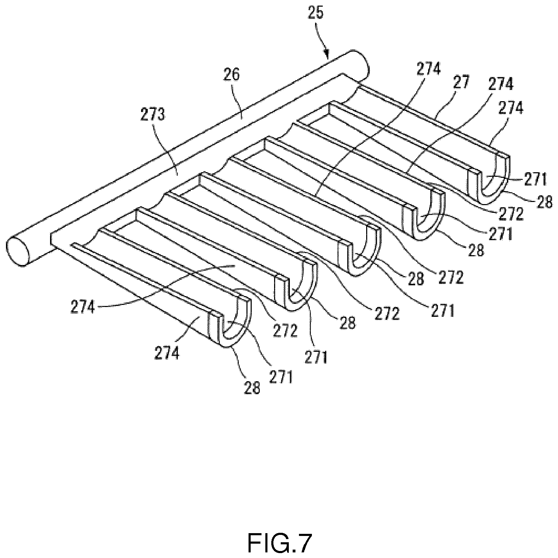

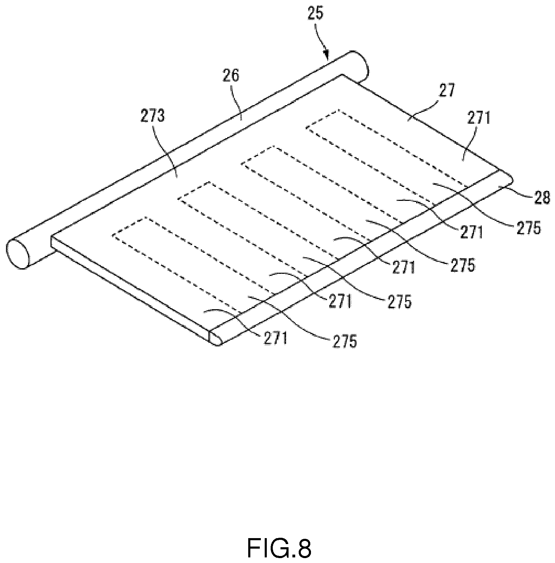

There are several configurations of the door body 27 of the movable guide 25: for example, the door body 27 of the movable guide 25 illustrated in Fig. 3 (embodiment 1), the door body 27 of the movable guide 25 illustrated in Fig. 7 (embodiment 2), and the door body 27 of the movable guide 25 illustrated in Fig. 8 (embodiment 3). First, the door body 27 of the movable guide 25 according to embodiment 1 will be described below.

### [Embodiment 1]

The door body 27 of the movable guide 25 according to embodiment 1 includes at least the plurality of extension parts 271 and the plurality of notch part 272 positioned between the extension parts 271. The extension parts 271 have a planar structure extending linearly. In embodiment 1, the extension parts 271 are connected, in the part close to the rotary shaft 26, to a base part 273 extending in the axial direction of the rotary shaft 26. Although not illustrated, the extension parts 271 may be individually connected to the rotary shaft 26 without using the base part 273.

In the embodiment, the number of the extension parts 271, the lateral width of the extension parts 271, and the interval of the extension parts 271 adjacent to each other correspond to the number of the hot air guide passage 20, the inner width of the hot air guide passage 20, and the interval of the hot air guide passages 20 and 20. That is, the number of the extension parts 271 is five, which corresponds to the number of the hot air guide passages 20 illustrated in Fig. 2, as illustrated in Fig. 3. In addition, the lateral width of the extension parts 271 equal to or slightly larger than the inner width between the side wall portion 22 and the side wall portion 22 of the hot air guide passage 20. The interval of the extension parts 271 and 271 adjacent to each other is equal to or slightly smaller than the interval of the hot air guide passages 20 and 20. Although not illustrated, when the hot air guide passages 20 illustrated in Fig. 2 do not have the side wall portions 22, the lateral width of the extension part 271 is substantially equal to the width of the bottom wall of the hot air guide passage 20 desirably.

In addition, the end of the extension part 271 is provided with the overlap part 28 and the amount of projection of the overlap part 28 from the extension part 271 is determined so that the overlap part 28 overlaps with the end part on the downstream side of the hot air guide passage 20 when the door body 27 rotates to the lower limit position. The overlap part 28 is made of, for example, an elastic material such as EPDM or Teflon rubber. When the movable guide 25 is manufactured by an injection molding process, the overlap parts 28 are preferably manufactured integrally with the movable guide 25 using insert molding. The quality of the movable guide 25 having the overlap part 28 can be stabilized.

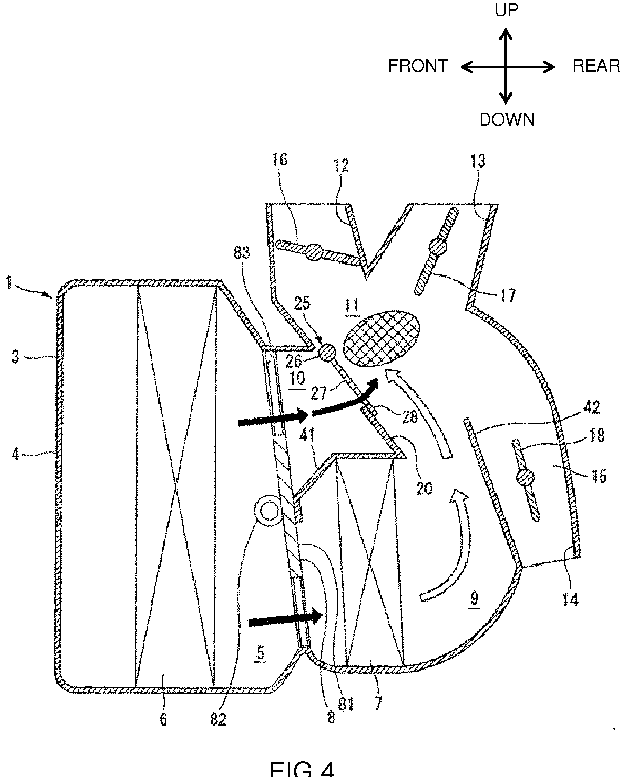

In the vehicle air conditioning unit 1 having the movable guide 25 described above, a flow of air in the full hot mode, a flow of air in the air mix mode, and a flow of air in the full cool mode will be described with reference to Fig. 4, Fig. 5, and Fig. 6, respectively. In Fig. 4 to Fig. 6, black arrows indicate flows of cool air and outline arrows indicate flows of hot air.

Fig. 4 indicates the air mix mode in which both cool air and hot air flow to the air mix chamber 11. In the position of the air mix door 8 in Fig. 4, the ratio of cool air heated by passing through the heating exchanger 7 is 50% to 60% (middle position in the guide rail 83). However, the air mix door 8 may be in a position in which the ratio of cool air heated by passing through the heating exchanger 7 is less than 50% or a position in which the ratio of cool air heated by passing through the heating exchanger 7 is more than 60% in the air mix mode. In addition, the defrost door 16 is closed, the vent door 17 is opened, the foot door 18 is opened, and the blowing mode is a so-called bi-level mode.

The door body 27 is in the lower limit position (first rotary position) in the air mix mode, the end of the movable quide 25 is oriented to the hot air guide passage 20 (the rear of the vehicle), and the five overlap parts 28 make contact with the surfaces (close to the rear of the vehicle) of the downstream side ends of the five hot air guide passages 20 without causing unusual sound so that the overlap parts 28 are accommodated in the hot air guide passages 20. Therefore, the extension parts 271 of the door body 27 of the movable guide 25 are put in the state in which the hot air guide passages 20 are extended toward (extended to the upper part of the air mix chamber 11) the upper part of the air mix chamber 11 when the door body 27 rotates to the lower limit position. Since the overlap parts 28 of the movable guide 25 make close contact with the surfaces (close to the rear of the vehicle) of downstream side ends of the hot air guide passages 20, there is not space through which air passes between the movable guide 25 and the hot air guide passage 20. In addition, since the movable guide 25 has the notch parts 272 as illustrated in Fig. 3, even when the extension parts 271 is positioned so as to cross the cool air duct 10 between the cool air duct 10 and the air mix chamber 11, the cool air duct 10 is not blocked.

In the air mix mode and the bi-level mode described above, the air blown to the air duct 5 by the blower unit is cooled by the cooling exchanger 6 and a part of the air bypasses the heating exchanger 7, passes through the cool air duct 10, and flows to the air mix chamber 11 and the rest is heated by the heating exchanger 7, passes through the hot air duct 9 and the hot air guide passage 20, flows to the air mix chamber 11, and blown into the vehicle interior through the vent outlet port 13 and the foot outlet port 14.

In the embodiment, the hot air guide passages 20 are extended toward (extended to the upper part of the air mix chamber 11) the upper part of the air mix chamber 11 via the extension parts 271 of the movable guide 25 and the overlap parts 28 of the movable guide 25 make close contact with the hot air guide passages 20. Accordingly, a part of hot air having flowed through the hot air guide passages 20 from the hot air duct 9 does not escape (leak) to the cool air duct 10 in midstream, flows along the extension parts 271, and is guided to the upper part of the air mix chamber 11. Accordingly, mixture between hot air and cool air in the air mix chamber 11 is promoted and the temperature of air blown out of the outlet port formed in the upper part of the HVAC unit 2 can be raised.

In addition, the hot air having not flowed through the hot air guide passage 20 flows to the air mix chamber 11. In contrast, the cool air having flowed through the cool air duct 10 passes through the notch parts 272 of the movable guide 25 and flows to the air mix chamber 11. Therefore, in the air mix chamber 11, hot air is appropriately mixed with cool air not only in the upper part of the air mix chamber 11, but also the inside or the lower part of the air mix chamber 11. At this time, since cool air having flowed through the cool air duct 10 passes through the notch parts 272 of the movable guide 25 and then flows to the air mix chamber 11, the extension parts 271 of the movable guide 25 are prevented from functioning as the passage resistance of cool air.

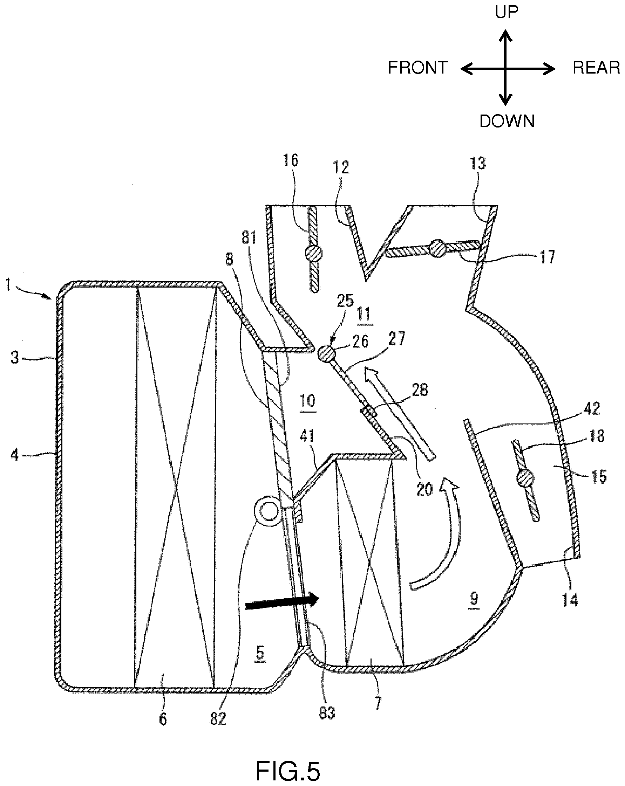

Fig. 5 illustrates the full hot mode in which only the hot air heated by the heating exchanger 7 flows to the air mix chamber 11, and the air mix door 8 is placed in the position (uppermost position in the guide rail 83) in which the ratio of the cool air cooled by the cooling exchanger 6 is heated by passing the heating exchanger 7 is 100%. In addition, the defrost door 16 is opened, the vent door 17 is closed, the foot door 18 is opened, and the blowing mode is a so-called defrost foot mode.

Even in the full hot mode, the door body 27 of the movable guide 25 is placed in the lower limit position (first rotary position), the end of the door body 27 is oriented to the hot air guide passages 20 (the rear of the vehicle), and the five overlap parts 28 make close contact with the surfaces (close to the rear of the vehicle) of the downstream side ends of the five hot air guide passages 20. Therefore, the extension parts 271 of the movable guide 25 extend the hot air guide passages 20 toward the upper part of the air mix chamber 11 (extends the hot air guide passage 20 to the upper part of the air mix chamber 11) when the door body 27 rotates to the lower limit position and the amount of hot air is not reduced, when the hot air flows from the hot air guide passages 20 to the extension parts 271.

In the full hot mode and the defrost mode described above, the air blown to the air duct 5 by the blower unit is cooled by the cooling exchanger 6 (or flows without heat exchange with the cooling exchanger 6), heated by the heating exchanger 7, passes through the hot air duct 9 and the air mix chamber 11. Then, a part of the air is blown into the vehicle interior through the defrost outlet port 12 and the rest is blown into the vehicle interior through the foot outlet port 14.

In the embodiment, the hot air guide passages 20 are extended toward the upper part of the air mix chamber 11 (extended to the upper part of the air mix chamber 11) via the extension parts 271 of the movable guide 25 as in the air mix mode and the overlap part 28 of the movable guide 25 makes close contact with the hot air guide passages 20. Accordingly, the hot air having flowed through the hot air guide passages 20 from the hot air duct 9 does not escape (leak) to the cool air duct 10 in midstream, flows along the extension parts 271, and is guided to the upper part of the air mix chamber 11. Accordingly, an appropriate amount of hot air can be blown through the defrost outlet port 12 and the foot outlet port 14.

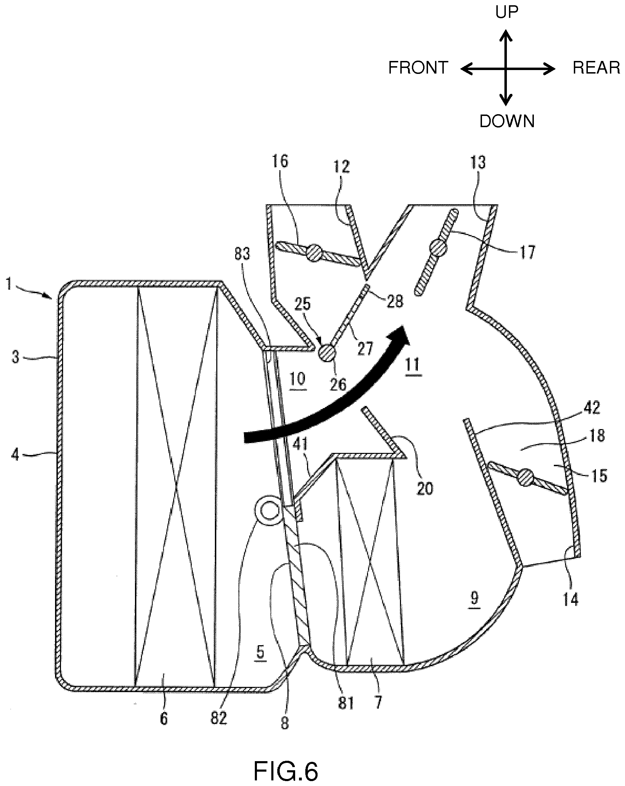

Fig. 6 illustrates the full cool mode in which only the air cooled by the cooling exchanger 6 flows to the air mix chamber 11 and the air mix door 8 is placed in the position in which the ratio of the cool air bypassing the heating exchanger 7 to the cool air cooled by the cooling exchanger 6 is 100% (lowermost position in the guide rail 83). In addition, the defrost door 16 is closed, the vent door 17 is opened, the foot door 18 is closed, and the blow mode is a so-called vent mode.

In the movable guide 25, the door body 27 is placed in the upper limit position (second rotary position) in the full cool mode, the end of the door body 27 is oriented to the vent outlet port 13 (the rear of the vehicle) in the embodiment, and the surfaces (close to the rear of the vehicle) of the door body 27 are substantially flush with the inner surface of the vent outlet port 13 close to the front of the vehicle. Accordingly, when the door body 27 rotates to the upper limit position, the door body 27 of the movable guide 25 is positioned outside the air mix chamber 11.

In the full cool mode and the vent mode described above, the air blown to the air duct 5 by the blower unit is cooled by the cooling exchanger 6, bypasses the heating exchanger 7, passes through the cool air duct 10 and the air mix chamber 11, and is blown into the vehicle interior from the vent outlet port 13.

In the embodiment, the door body 27 of the movable guide 25 is positioned outside the air mix chamber 11 and the extension of the hot air guide passages 20 by the extension parts 271 of the movable guide 25 is removed. Therefore, in the full cool mode, an increase in the air-flow resistance of cool air due to the movable guide 25 can be surely suppressed.

### [Embodiment 2]

The door body 27 of the movable guide 25 according to embodiment 2 will be described with reference to Fig. 7. However, the same components as in the door body 27 of the movable guide 25 according to embodiment 1 are basically given the same reference numerals and duplicate descriptions are omitted.

The door body 27 of the movable guide 25 is the same as in embodiment 1 in that the door body 27 has as many (five in embodiment 2) extension parts 271 as the hot air guide passages 20 and the plurality of notch parts 272 positioned between the extension parts 271 and the overlap parts 28 are provided at the ends of the extension parts 271.

In contrast, the door body 27 of the movable guide 25 is provided with the air guide parts 274 extending from the base part 273 to the overlap parts 28 along the extension parts 271 in the side parts on both sides of the extension parts 271. The extension parts 271 are partitioned by the air guide parts 274 in the left-right direction of the vehicle. The height of air guide part 274 measured from the extension part 271 increases gradually toward the overlap part 28 from the base part 273 in embodiment 2. In addition, the outer surface and the inner surface formed by the extension part 271 and the air guide parts 274 and 274 have a substantially arc-shaped cross section in embodiment 2.

By using the movable guide 25 having the above structure, when the hot air guide passages 20 are extended via the extension parts 271 of the movable guide 25 to send hot air to the upper part of the air mix chamber 11 in the air mix mode, the hot air flowing along the extension parts 271 can be surely guided to the upper part of the air mix chamber 11 using the air guide parts 274 even when the amount of the hot air is small. In addition, since the outer surface of hot air guide passage 271 has a substantially arc-shaped cross section, when the cool air having flowed through the cool air duct 10 flows to the air mix chamber 11 in the air mix mode, an increase in the air-flow resistance can be suppressed.

### [Embodiment 3]

The door body 27 of the movable guide 25 according to embodiment 3 will be described with reference to Fig. 8. However, the same components as in the door body 27 of the movable guide 25 according to embodiments 1 and 2 as described above are basically given the same reference numerals and duplicate descriptions are omitted.

The door body 27 of the movable guide 25 is the same as in embodiment 1 in that the door body 27 has as many (five in embodiment 3) extension parts 271 as the hot air guide passages 20 and the ends of the extension parts 271 are provided with the overlap parts 28. On the other hand, the door body 27 of the movable guide 25 is provided with the bridge parts 275 between the extension part 271 and the extension part 271 and the notch parts 272 are omitted. The ends of the bridge parts 275 are also provided with the overlap parts 28. Accordingly, in the door body 27, the extension parts 271 and the bridge parts 275 form one plate and only the overlap parts 28 are integrated into one.

By using the movable guide 25 having the above structure, when the hot air guide passages 20 are extended via the extension parts 271 of the movable guide 25 to send hot air to the upper part of the air mix chamber 11 in the air mix mode, it is possible to prevent mixture by guiding a part of hot air to the upper part of the air mix chamber 11 using the extension parts 271 and limiting the amount of cool air to be joined to hot air in the air mix chamber 11 using the bridge parts 275.

Although embodiments of the invention have been described above with reference to the drawings, embodiments of the invention are not limited to these embodiments. For example, although the blower unit is disposed in the left or right direction of the vehicle with respect to the HVAC unit 2, the blower unit may be disposed above the HVAC unit 2. Although the heating exchanger 7 is a hot water type heater core in the above embodiments, the heating exchanger 7 may configured by an electric heating type heater core or a refrigerant radiator or an electric heating type heater core or a refrigerant radiator may be used together with a hot water type heater core.
- 1: vehicle air conditioning unit
- 4: case
- 5: air duct
- 7: heating exchanger
- 8: air mix door
- 9: hot air duct
- 10: cool air duct
- 11: air mix chamber
- 12: defrost outlet port
- 13: vent outlet port
- 14: foot outlet port
- 16: defrost door
- 17: vent door
- 18: foot door
- 20: hot air guide passage
- 25: movable guide
- 26: rotary shaft
- 27: door body
- 271: extension part
- 272: notch part
- 274: air guide part
- 275: bridge part
- 28: overlap part

## Claims

1. A vehicle air conditioning unit (1) comprising:
a case (4) having an air duct (5) through which air flows;
a heating exchanger (7) that heats the air flowing through the air duct to generate hot air;
an air mix door (8) disposed in the air duct, the air mix door adjusting a ratio between the air flowing to the heating exchanger and the air bypassing the heating exchanger;
an air mix chamber (11) provided in the case, the air mix chamber mixing the air having passed through the heating exchanger with the air having bypassed the heating exchanger;
a hot air guide passage (20) disposed in the air duct, the hot air guide passage guiding a part of the hot air from a lower part of the air mix chamber to an inside of the air mix chamber; and
a movable guide (25) disposed in the air duct, the movable guide including a rotary shaft (26) and a door body (27) provided on the rotary shaft, the door body extending the hot air guide passage to an upper part of the air mix chamber in a first rotary position, the door body being positioned outside the air mix chamber in a second rotary position.

2. The vehicle air conditioning unit (1) according to claim 1,
wherein the movable guide (25) is placed in the first rotary position in an air mix mode in which the air flowing to the heating exchanger is mixed with the air bypassing the heat exchanger in the air mix chamber and
the movable guide is placed in the second rotary position in a full cool mode in which only the air bypassing the heat exchanger flows to the air mix chamber.

3. The vehicle air conditioning unit (1) according to claim 1 or 2,
wherein the door body (27) of the movable guide has an overlap part (28) overlapping with an end part on a downstream side of the hot air guide passage in the first rotary position.

4. The vehicle air conditioning unit (1) according to claim 3,
wherein the overlap part of the door body (27) is made of an elastic member.

5. The vehicle air conditioning unit (1) according to any one of claims 1 to 4,
wherein a plurality of the hot air guide passages (20) are disposed along a right-left direction of a vehicle,
the door body (27) has
a plurality of extension parts (271) disposed so as to correspond to the plurality of the hot air guide passages disposed, the plurality of extension parts extending the hot air guide passages in the first rotary position, and
a plurality of notch parts (272) provided between the plurality of extension parts.

6. The vehicle air conditioning unit (1) according to any one of claims 1 to 4,
wherein a plurality of the hot air guide passages (20) are disposed along a right-left direction of a vehicle,
the door body (27) has
a plurality of extension parts (271) disposed so as to correspond to the plurality of the hot air guide passages disposed, the plurality of extension parts extending the hot air guide passages in the first rotary position, and
a plurality of bridge parts (275) provided between the plurality of extension parts.

7. The vehicle air conditioning unit (1) according to any one of claims 1 to 6,
wherein a plurality of the hot air guide passages (20) are disposed along a right-left direction of a vehicle,
the door body (27) has
a plurality of extension parts (271) disposed so as to correspond to the plurality of the hot air guide passages disposed, the plurality of extension parts extending the hot air guide passages, and
an air guide part (274) extending along the extension parts, the air guide part partitioning the extension parts in the left-right direction of the vehicle.
